# FASCICULE DE BREVET EUROPEEN

(11) **EP 2 672 134 B1**
(45) Date de publication et mention de la délivrance du brevet: **10.07.2019**
(21) Numéro de dépôt: 13168287.4
(22) Date de dépôt: 17.05.2013
(51) Int. Cl.: F16C 33/78, F16J 15/3232, F16J 15/3276, F03D 80/70, F16C 19/06

(54) **Dispositif d'étanchéité de roulement de grande dimension**
Dichtungsanordnung eines Großwälzlagers
Sealing device for a large rolling bearing

(30) Priorité: 04.06.2012 FR 1255171
(43) Date de publication de la demande: 11.12.2013
(73) Titulaire: Defontaine, 85530 La Bruffière (FR)
(72) Inventeur: JACQUEMONT, Eric, 44190 Clisson (FR); DELACOU, Jean-Michel, 85290 Mortagne sur Sèvre (FR); CHATRY, Didier, 85530 La Bruffière (FR)
(74) Mandataire: Novagraaf Technologies

(56) Documents cités:
- DE-U1-202008 017 335
- DE-U1-202010 014 830
- FR-A1- 2 479 374
- FR-A1- 2 672 098
- JP-A- 2002 372 060
- JP-A- 2004 270 775
- JP-A- 2007 255 682
- JP-U- H 041 724
- US-A- 4 854 749
- US-A1- 2011 103 728

## Description

La présente invention se rapporte à un dispositif d'étanchéité circulaire utilisé en particulier sur les couronnes comprenant des roulements comme par exemple celles de pales d'éoliennes.

Le document US 4 854 749 A divulgue un roulement avec un dispositif d'étanchéité avec les caractéristiques du préambule de la revendication 1.

Les documents DE 20 2010 014 830 U1, US 2011 103 728 A1, JP H04 1724 U et DE 20 2008 017 335 U1 concernent des roulements avec un dispositif d'étanchéité avec deux lèvres utilisé dans une couronne de pales d'éolienne ou apte à l'utilisation dans un roulement d'éolienne.

Ces dispositifs comprennent en général deux pièces d'étanchéité circulaire généralement en caoutchouc, une bague extérieure et une bague intérieure concentrique à la première bague. Les pièces d'étanchéité sont fixées de façon symétrique, la première au dessus de et en appui sur l'une des bagues, la deuxième en dessous de et en appui sur l'autre bague et placées entre les deux bagues. Elles comprennent une lèvre placée en appui sur la face extérieure de la bague mobile par rapport à leur fixation respective.

Cependant ces dispositifs ne sont pas suffisamment fiables car à partir d'une certaine pression du lubrifiant ou de la graisse intérieure la lèvre se décolle et l'étanchéité n'est alors plus réalisée ce qui crée des fuites vers l'extérieur. Pour des raisons purement écologiques et esthétiques, la graisse qui coule sur les pales ou le moyeu d'une éolienne donne une impression et une réalité de pollution néfaste à l'image de propreté de l'éolien. Ceci est d'autant plus critique que ces dispositifs ont de grandes dimensions et que les quantités de lubrifiant en cause peuvent être importants. Par exemple, les couronnes de pales d'éolienne de plusieurs méga watts qui ont des diamètres de plusieurs mètres , 2 à 6 m aujourd'hui, certainement plus dans un futur proche.

La présente invention se propose de résoudre ce problème en proposant un roulement avec dispositif d'étanchéité comprenant une pièce circulaire d'étanchéité, une bague intérieure et une bague extérieure, l'une des deux bagues pouvant tourner par rapport à un axe, la pièce circulaire étant disposée entre les deux bagues dans lequel la pièce circulaire comprend deux lèvres circulaires disposées dans une gorge inclinée par rapport à l'axe de rotation de la bague prévue sur la face d'une d'une des bagues, une première lèvre du côté extérieur au roulement et une deuxième lèvre du côté intérieur au roulement et un profil d'accrochage fixé dans une gorge aménagée dans l'autre bague, ladite deuxième lèvre s'étend sensiblement perpendiculaire à la première lèvre et a une courbure dirigée vers l'espace de roulement entre les deux bagues.

L'inclinaison de la gorge et des lèvres permet d'augmenter la surface de contact potentielle par rapport à une gorge classique perpendiculaire à l'axe de rotation de la couronne, puisque pour une distance donnée entre une face extérieur et une face intérieur d'une bague, la gorge peut être plus longue. La pression de cette lèvre sur la surface inclinée de la gorge augmente avec la pression du produit de graissage ou du lubrifiant à retenir confiné à l'intérieur du roulement. La surface du côté extérieur au roulement de la gorge est orientée pour s'opposer au mouvement de pivotement de la première lèvre puisqu'elle est quasi perpendiculaire à ce mouvement, ainsi la tenue de cette lèvre à l'expulsion est améliorée. Les deux lèvres sont précontraintes dans la gorge ce qui permet un meilleur maintien, et la pression interne augmente cette précontrainte par déroulement de l'autre lèvre. La deuxième lèvre, situé à l'intérieur, sous l'effet de la pression de la graisse se déroule vers le fond de la gorge, son rayon de courbure augmente ce qui augmente la pression de contact de la première lèvre du fait de sa position orthogonale. La pression des deux lèvres situées dans la gorge sur les flancs de cette gorge augmente et ainsi l'efficacité de l'étanchéité. Ainsi, la pression des lèvres s'adapte à la pression régnant à l'intérieur du roulement, quand la pression de la graisse est faible, il y a une faible pression de contact des lèvres sur les faces de la gorges et inversement si pression augmente la pression des lèvres augmente. L'inclinaison de la gorge permet de renforcer la pression sur la première lèvre ce qui évite l'expulsion quand la pression intérieure est trop importante.

Selon une caractéristique particulière, la gorge est inclinée vers l'extérieur du roulement, tel que son fond est plus proche de l'extérieur que son entrée. L'inclinaison vers l'extérieur favorise l'éloignement des impuretés du bord du joint, la gravité les entrainant vers le milieu de la pièce d'étanchéité.

Selon un mode de réalisation, les deux flancs de la gorge sont parallèles.

Selon un autre mode de réalisation, le flanc du côté intérieur au roulement de la gorge est évasé par rapport au flanc du côté extérieur au roulement. Cette forme évasée permet une insertion plus aisée de l'ensemble des deux lèvres dans ladite gorge.

Selon une autre caractéristique, le profil d'accrochage est un profil sapin.

Selon une disposition particulière, la première lèvre est en appui sur le flanc du côté extérieur au roulement de la gorge.

Selon une autre disposition, la deuxième lèvre est en appui sur le flanc du côté intérieur au roulement de la gorge. Le flanc évasé augmente la retenue de la deuxième lèvre quand celle-ci pivote sous la pression de la graisse, la forme et la section de la deuxième lèvre ont été optimisées pour que la pression du contact augmente quand la pression de la graisse augmente.

Selon une caractéristique particulière, la pièce circulaire d'étanchéité comprend un talon en appui sur une face intérieure (42) de la bague extérieure (4) ou sur une face extérieure (21) de la bague intérieure (2). Ce talon permet de maintenir en place le profil d'accrochage sur ladite bague qui peut être la bague extérieure ou la bague intérieure et dans le but d'augmenter la pression retenue avant l'expulsion du profil sapin, la pression exercée sur le talon augmente avec la pression interne du lubrifiant.

Selon une autre caractéristique, la bague présente une aspérité périphérique qui coopère avec le talon. L'aspérité périphérique est placée à l'intérieur de la bague extérieure ou à l'extérieur de la bague intérieure et selon le cas assure un blocage complet du talon sur ladite bague.

L'invention concerne aussi une couronne de pales d'éolienne équipée d'un roulement avec dispositif d'étanchéité présentant une ou plusieurs des caractéristiques précédentes.

D'autres avantages pourront encore apparaître à l'homme du métier à la lecture de l'exemple ci-dessous, illustré par la figure annexée, donnés à titre illustratif.
- La figure 1 représente un vue en coupe du dispositif d'étanchéité selon l'invention,
- La figure 2 montre un roulement en coupe.

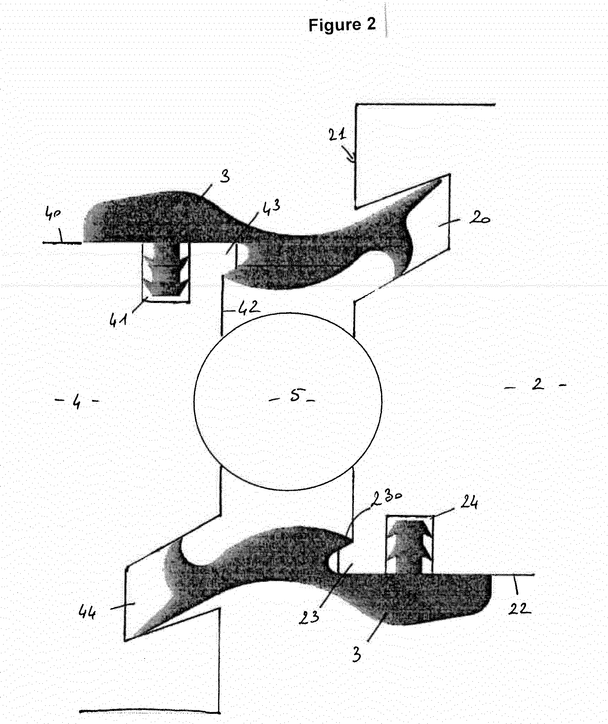

On considérera dans la suite de la description que les adjectifs supérieur et inférieur se rapportent à la figure 2, le haut est situé en haut de la figure et le bas en bas, l'intérieur est situé à droite de la figure et l'extérieur à gauche.

Le dispositif d'étanchéité 1 selon l'invention comprend une bague intérieure 2 et une bague extérieure 4, entre les deux bagues est disposée une première et une deuxième pièce circulaire d'étanchéité 3 ou joint d'étanchéité. L'axe des bagues est commun (non représenté) et situé dans la partie droite de la figure 2. On considèrera que l'axe des bagues constitue le centre du dispositif d'étanchéité et que le lubrifiant est placé entre les deux pièces circulaires d'étanchéité 3.

La bague intérieure 2 présente sur sa face extérieure 21 une gorge 20 circulaire. La gorge 20 a deux flancs : un flanc supérieur 200 situé à l'extérieur de la zone où est placé le lubrifiant et un flanc inférieur 201 situé du coté du lubrifiant. Le flanc inférieur 201 est plus incliné vers le bas que le flanc supérieur 200 définissant ainsi une gorge évasée. La gorge 20 est ainsi évasée vers le bas soit à l'extérieur du volume à protégé. Les deux flancs 200 et 201 peuvent être parallèles sans sortir du cadre de l'invention.

De la même façon, la bague extérieure 4, comme visible dans la figure 2, présente sur sa face intérieure 42 une gorge 44 circulaire. La gorge 44 étant identique à la gorge 20 ne sera pas plus décrite.

La bague extérieure 4 a une face supérieure 40 qui est percée d'une gorge 41. La bague 2 est également percée d'une gorge 24 sur sa face inférieure 22.

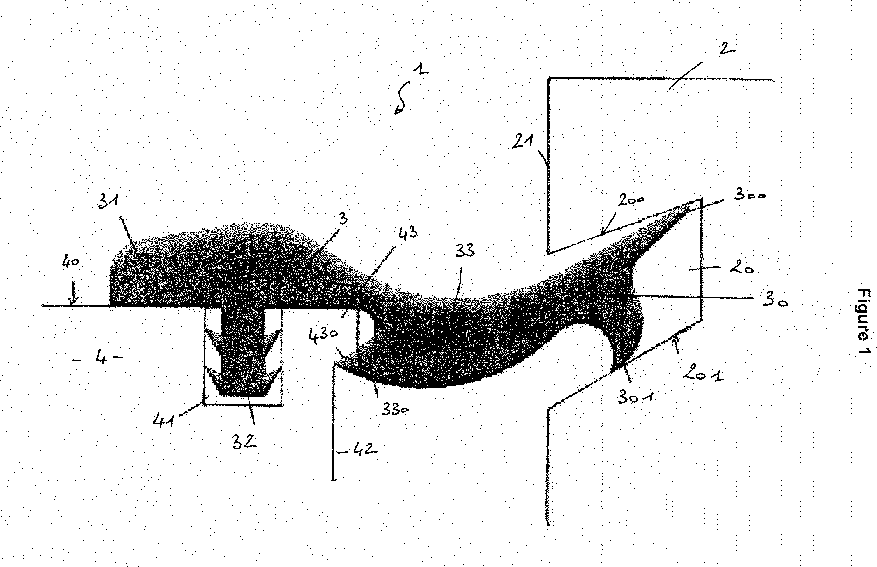

La première pièce d'étanchéité 3, comme visible dans la figure 1, a sur sa partie intérieure 30 deux lèvres 300 et 301 circulaires. Les deux lèvres 300 et 301 sont perpendiculaires entre elles. La lèvre supérieure 300 est en appui sur le flanc supérieur 200 de la gorge 20, et la lèvre inférieure 301 est en appui sur le flanc inférieur 201 de la gorge 20. La lèvre supérieure 300 est sensiblement parallèle au flanc supérieur 200, alors que la lèvre inférieure 301 est sensiblement perpendiculaire au flanc inférieur 201. La lèvre inférieure 301 présente une courbure dirigée vers l'espace de roulement entre les deux bagues 2 et 4. La pression du lubrifiant tend à dérouler la lèvre 301, ce qui pousse la lèvre 300 en contact avec la surface 200 et augmente ainsi la surface de contact entre ladite lèvre 300 et la surface 200. La pression à tendance à créer un effort radial qui s'oppose à l'extrusion des deux lèvres de la gorge.

La pièce d'étanchéité 3 présente dans sa partie fixation 31 un profil d'accrochage 32 orienté vers le bas dans la figure 2 pour coopérer avec la gorge 41. Il est orienté vers le haut pour la gorge 24 situé sur la face 22 de la bague 2. Le profil d'accrochage 32 est un profil sapin. La couronne d'orientation comprend des billes 5 et deux joints d'étanchéité de ce type dans la figure 2:
- un en partie supérieure avec sa partie fixation 31 sur la bague 4 dont la face 40 est la face d'appui sur le support du roulement,
- un en partie inférieure avec sa partie fixation 31 sur l'autre bague 2, dont la face 22 est également la face d'appui.

La pièce d'étanchéité 3 a également un talon 330 anti-extrusion situé dans la partie centrale 33 de ladite pièce 3. Ce talon 330 est orienté vers la face 21 ou la face 42 et coopère avec ladite face 21 ou 42 de la bague 2 ou 4. La face 21 ou 42 présente une aspérité périphérique 23 ou 43 sur laquelle le talon 330 vient prendre appui. L'aspérité 23 ou 43 présente un bord 230 ou 430 sensiblement parallèle au talon 330.

## Revendications

1. Roulement avec dispositif d'étanchéité (1) comprenant au moins une pièce circulaire d'étanchéité (3), une bague intérieure (2) et une bague extérieure (4), l'une des deux bagues pouvant tourner par rapport à un axe, la pièce circulaire (3) étant disposé entre les deux bagues (2, 4) **caractérisé en ce que** la pièce circulaire (3) comprend deux lèvres circulaires (300, 301) disposées dans une gorge (20) inclinée par rapport à l'axe de rotation, prévue sur une des faces (21, 42) de l'une des bagues (2, 4), une première lèvre (300) du côté extérieure au roulement et une deuxième lèvre (301) du côté intérieure au roulement et un profil d'accrochage (32) fixé dans une gorge (41) aménagée dans l'autre bague (4, 2) **caractérisé en ce que** ladite deuxième lèvre (301) s'étend sensiblement perpendiculaire à la première lèvre (300) et a une courbure dirigée vers l'espace de roulement entre les deux bagues (2, 4).

2. Roulement avec dispositif d'étanchéité selon la revendication précédente **caractérisé en ce que** la gorge (20) est inclinée vers l'extérieur du roulement, tel que son fond est plus proche de l'extérieur que son entrée.

3. Roulement avec dispositif d'étanchéité selon une des revendications précédentes **caractérisé en ce que** la gorge (20) présente deux flancs (200, 201) parallèles.

4. Roulement avec dispositif d'étanchéité selon une des revendications 1 ou 2 **caractérisé en ce que** le flanc du côté intérieur au roulement (201) de la gorge (20) est évasé par rapport au flanc du côté extérieur au roulement (200).

5. Roulement avec dispositif d'étanchéité selon une des revendications précédentes **caractérisé en ce que** le profil d'accrochage (32) est un profil sapin.

6. Roulement avec dispositif d'étanchéité selon une des revendications précédentes **caractérisé en ce que** la première lèvre (300) est en appui sur le flanc du côté extérieur au roulement (200) de la gorge (20).

7. Roulement avec dispositif d'étanchéité selon la revendication précédente **caractérisé en ce que** la deuxième lèvre (301) est en appui sur le flanc du côté intérieur au roulement (201) de la gorge (20).

8. Roulement avec dispositif d'étanchéité selon une des revendications précédentes **caractérisé en ce que** la pièce circulaire d'étanchéité (3) comprend un talon (330) en appui sur une face intérieure (42) de la bague extérieure (4) ou sur une face extérieure (21) de la bague intérieure (2).

9. Roulement avec dispositif d'étanchéité selon la revendication précédente **caractérisé en ce que** la bague (2, 4) présente une aspérité périphérique (23, 43) qui coopère avec le talon (330).

10. Couronne de pales d'éolienne **caractérisée en ce qu'**elle est équipée d'un roulement avec dispositif d'étanchéité selon une des revendications précédentes.

## Patentansprüche

1. Lager mit Abdichtvorrichtung (1), das mindestens ein kreisförmiges Abdichtteil (3), einen Innenring (2) und einen Außenring (4) umfasst, wobei einer der zwei Ringe bezüglich einer Achse drehen kann, wobei das kreisförmige Teil (3) zwischen den zwei Ringen (2, 4) angeordnet ist, **dadurch gekennzeichnet, dass** das kreisförmige Teil (3) zwei kreisförmige Lippen (300, 301) umfasst, die in einer Nut (20) angeordnet sind, die bezüglich der Rotationsachse geneigt ist, die auf einer der Flächen (21, 42) eines der Ringe (2, 4) vorgesehen ist, eine erste Lippe (300) auf der Seite außerhalb des Lagers und eine zweite Lippe (301) auf der Seite innerhalb des Lagers, sowie ein Anhängprofil (32), das in einer Nut (41) befestigt ist, die in dem anderen Ring (4, 2) eingerichtet ist, **dadurch gekennzeichnet, dass** sich die zweite Lippe (301) im Wesentlichen senkrecht zu der ersten Lippe (300) erstreckt und eine Krümmung aufweist, die zu dem Laufraum zwischen den zwei Ringen (2, 4) gerichtet ist.

2. Lager mit Abdichtvorrichtung nach dem vorstehenden Anspruch, **dadurch gekennzeichnet, dass** die Nut (20) nach außerhalb des Lagers geneigt ist, so dass ihr Grund dem Äußeren näher ist als ihr Eingang.

3. Lager mit Abdichtvorrichtung nach einem der vorstehenden Ansprüche, **dadurch gekennzeichnet, dass** die Nut (20) zwei parallele Flanken (200, 201) aufweist.

4. Lager mit Abdichtvorrichtung nach einem der Ansprüche 1 oder 2, **dadurch gekennzeichnet, dass** die Flanke der Seite innerhalb des Lagers (201) der Nut (20) bezüglich der Flanke der Seite außerhalb des Lagers (200) aufgeweitet ist.

5. Lager mit Abdichtvorrichtung nach einem der vorstehenden Ansprüche, **dadurch gekennzeichnet, dass** das Anhängprofil (32) ein Lamellenfußprofil ist.

6. Lager mit Abdichtvorrichtung nach einem der vorstehenden Ansprüche, **dadurch gekennzeichnet, dass** die erste Lippe (300) auf der Flanke der Seite außerhalb des Lagers (200) der Nut (20) in Auflage ist.

7. Lager mit Abdichtvorrichtung nach dem vorstehenden Anspruch, **dadurch gekennzeichnet, dass** die zweite Lippe (301) auf der Flanke der Seite innerhalb des Lagers (201) der Nut (20) in Auflage ist.

8. Lager mit Abdichtvorrichtung nach einem der vorstehenden Ansprüche, **dadurch gekennzeichnet, dass** das kreisförmige Abdichtteil (3) einen Absatz (330) in Auflage auf einer inneren Fläche (42) des Außenrings (4) oder auf einer Außenfläche (21) des Innenrings (2) umfasst.

9. Lager mit Abdichtvorrichtung nach dem vorstehenden Anspruch, **dadurch gekennzeichnet, dass** der Ring (2, 4) eine umfängliche Rauigkeit (23, 43) aufweist, die mit dem Absatz (330) zusammenwirkt.

10. Schaufelkranz einer Windkraftanlage, **dadurch gekennzeichnet, dass** er mit einem Lager mit Abdichtvorrichtung nach einem der vorstehenden Ansprüche ausgestattet ist.

## Claims

1. Bearing with sealing device (1) comprising at least one sealing circular piece (3), an inner ring (2) and an outer ring (4), one of the two rings being able to rotate relative to an axis, the circular piece (3) being arranged between the two rings (2, 4), **characterized in that** the circular piece (3) comprises two circular lips (300, 301) arranged in a groove (20) inclined with respect to the rotation axis, provided on one of the faces (21, 42) of one of the rings (2, 4), a first lip (300) on the outside of the bearing and a second lip (301) on the inside of the bearing and an attachment profile (32) fixed in a groove (41) formed in the other ring (4, 2) **characterised in that** said second lip (301) is substantially perpendicular to the first lip (300) and has a radius of curvature directed towards the space between the two rings (2, 4).

2. Bearing with sealing device according to the preceding claim, **characterized in that** the groove (20) is inclined towards the outside of the raceway such that its bottom is closer to the outside than to its inlet.

3. Bearing with sealing device according to one of the preceding claims, **characterized in that** the groove (20) has two parallel sides (200, 201).

4. Bearing with sealing device according to one of claims 1 and 2, **characterized in that** the side of the inner side of the bearing (201) of the groove (20) is flared relative to the side of the outer side of the bearing (200).

5. Bearing with sealing device according to one of the preceding claims, **characterized in that** the attachment profile (32) is a fir tree profile.

6. Bearing with sealing device according to one of the preceding claims, **characterized in that** the first lips (300) presses on the upper side of the outer side of the bearing (200) of the groove (20).

7. Bearing with sealing device according to the preceding claim, **characterized in that** the second lip (301) presses on the lower side of the inner side of the bearing (201) of the groove (20).

8. Bearing with sealing device according to one of the preceding claims, **characterized in that** the sealing circular piece (3) comprises a heel (330) pressing on an inner face (42) of the outer ring (4) or on an outer face (21) of the inner ring (2).

9. Bearing with sealing device according to the preceding claim, **characterized in that** the ring (2, 4) has a peripheral bump (23, 43) which cooperates with the third heel (330).

10. Wind turbine blade crown ring, **characterized in that** it is equipped with a bearing with sealing device according to one of the preceding claims.
